# FASCICULE DE BREVET EUROPEEN

(11) **EP 0 799 766 B1**
(45) Date de publication et mention de la délivrance du brevet: **08.05.2002**
(21) Numéro de dépôt: 97400656.1
(22) Date de dépôt: 24.03.1997
(51) Int. Cl.: B64C 13/16, G05D 1/06

(54) **Dispositif pour maintenir la vitesse d'un avion à l'intérieur d'un domaine de vitesses déterminé**
Vorrichtung um die Geschwindigkeit eines Flugzeugs in einem vorgegebenen Bereich zu halten
Device for keeping the speed of an aircraft within a predetermined range

(30) Priorité: 05.04.1996 FR 9604311
(43) Date de publication de la demande: 08.10.1997
(73) Titulaire: AEROSPATIALE MATRA, 75016 Paris (FR)
(72) Inventeur: Maffre, Claude, 31830 La Salvetat St Gilles (FR); Muller, Jean, 31300 Toulouse (FR)
(74) Mandataire: Bonnetat, Christian

(56) Documents cités:
- WO-A-84/01345
- WO-A-92/20052
- US-A- 4 590 475
- US-A- 4 841 448

## Description

La présente invention concerne un dispositif permettant de maintenir la vitesse d'un aéronef à l'intérieur d'un domaine de vitesses (domaine opérationnel) limité par la vitesse maximale et la vitesse minimale autorisées en fonction des capacités techniques dudit aéronef, et ceci, quelle que soit la trajectoire commandée.

On notera que l'invention s'applique plus particulièrement à un aéronef, notamment un avion de transport, comportant des moyens de commande pour appliquer audit aéronef une pente commandée et une vitesse commandée, à partir de valeurs de commande reçues.

De façon connue, lesdits moyens de commande sont incorporés :
- soit dans le pilote automatique de l'aéronef, qui est capable d'agir :
   . d'une part, directement par l'intermédiaire d'organes de commande connus appropriés, sur les gouvernes de l'aéronef pour modifier la pente de ce dernier ; et
   . d'autre part, indirectement, sur l'installation motrice pour modifier la poussée. La vitesse de l'aéronef résulte de la combinaison pente/poussée ;
- soit dans le directeur de vol, qui indique au pilote les manoeuvres à effectuer sur la commande de contrôle de l'axe de tangage pour obtenir la trajectoire commandée.

Par conséquent, l'utilisation d'un pilote automatique automatise complètement le processus de commande de vitesse et de pente, tandis que l'utilisation d'un directeur de vol nécessite l'intervention du pilote.

Toutefois, malgré ces différences, et bien que dans la présente description on se réfère en priorité à un pilote automatique, l'invention s'applique aussi bien à un aéronef muni d'un pilote automatique qu'à un aéronef muni d'un directeur de vol.

Par ailleurs, de façon connue, pour une pente de l'aéronef correspondant à une valeur de commande imposée, le maintien de la vitesse de l'aéronef à une valeur prescrite est assuré par le contrôle de la poussée engendrée par l'installation motrice dudit aéronef, ledit contrôle étant assuré :
- soit manuellement, par le pilote, par un déplacement adéquat de la manette de gaz ;
- soit automatiquement, au moyen d'un système de contrôle automatique de la poussée.

Dans ces conditions, le maintien de la vitesse dans le domaine opérationnel est impossible dans les situations suivantes :
- d'une part, lorsque pour une pente imposée positive, c'est-à-dire qui correspond à la montée de l'aéronef, la vitesse obtenue par la poussée maximale susceptible d'être engendrée par l'installation motrice devient inférieure à la vitesse minimale prescrite ; et
- d'autre part, lorsque pour une pente imposée négative, c'est-à-dire qui correspond à la descente de l'aéronef, la vitesse obtenue par la poussée minimale devient supérieure à la vitesse maximale prescrite.

Pour remédier à ces situations critiques, le pilote automatique comporte des protections internes, prévues au niveau de centres de décisions localisés relatifs aux différents modes de fonctionnement possibles de l'aéronef, qui permettent, soit de limiter les valeurs de commande imposées au pilote automatique, soit de modifier le mode de fonctionnement pour que la pente imposée soit compatible avec les vitesses de référence maximale et minimale prescrites.

Toutefois, de telles protections internes présentent de nombreux inconvénients, notamment :
- une duplication des protections est nécessaire au niveau de chaque centre de décision protégé ; et surtout
- l'étendue d'une protection est limitée au champ d'application du centre de décision correspondant avec son autorité propre, notamment dans le mode de fonctionnement en croisière de l'aéronef, ce qui peut entraîner une excursion importante et fortement préjudiciable de la vitesse de l'aéronef en dehors du domaine limité par la vitesse minimale et la vitesse maximale autorisées.
Par le document WO-8 401 345, on connaît un système de commande de vol d'un aéronef, qui permet de contrôler la vitesse de l'aéronef, en agissant simultanément et de façon combinée sur la pente et la poussée.

Ce système connu comporte notamment :
- des moyens de commande pour appliquer à l'aéronef une pente commandée ;
- des moyens de commande pour appliquer audit aéronef une poussée commandée ;
- des moyens pour déterminer la vitesse effective dudit aéronef ; et
- des moyens pour comparer ladite vitesse effective respectivement à des vitesses maximale et minimale.

Ledit système connu met en oeuvre une action combinée qui est fort complexe et qui permet d'obtenir simultanément et de façon liée :
- un ordre de commande de la poussée des moteurs de l'aéronef, appliqué à des servocommandes ; et
- un ordre de commande de la pente également appliqué à des servocommandes appropriées.

De plus, la chaîne de calcul de l'ordre de commande de la poussée et la chaîne de calcul de l'ordre de commande de la pente sont fortement imbriquées l'une dans l'autre, avec de nombreuses liaisons entre ces chaînes, c'est-à-dire de nombreux paramètres qui sont calculés pour l'une des chaînes sont également utilisés par l'autre et inversement. Par conséquent, ce système connu est complexe.

La présente invention a pour objet de remédier à ces inconvénients. Elle concerne un dispositif permettant de maintenir automatiquement la vitesse d'un aéronef, notamment un avion de transport, à l'intérieur d'un domaine de vitesses limité par les vitesses minimale et maximale autorisées en fonction des capacités techniques dudit aéronef.

A cet effet, selon l'invention, ledit dispositif qui comporte :
- des moyens de commande pour appliquer audit aéronef une pente commandée ;
- des moyens pour déterminer la vitesse effective dudit aéronef ; et
- des moyens pour comparer ladite vitesse effective respectivement auxdites vitesses maximale et minimale,
est remarquable en ce qu'il comporte de plus :
- des moyens pour calculer, en fonction desdites comparaisons, deux valeurs de commande modifiées susceptibles d'aligner ladite vitesse effective respectivement sur lesdites vitesses maximale et minimale, par modification exclusivement de la pente ; et
- des moyens, à action prioritaire, pour imposer exclusivement auxdits moyens de commande l'une desdites valeurs de commande modifiées, si une telle action est nécessaire pour maintenir la vitesse dudit aéronef à l'intérieur dudit domaine de vitesses.

Ainsi, grâce à l'invention, lorsque pour une pente commandée, la vitesse effective de l'aéronef devient soit inférieure à la vitesse minimale autorisée, soit supérieure à la vitesse maximale autorisée, avec une avance de phase, les moyens à action prioritaire du dispositif conforme à l'invention, imposent aux moyens de commande une valeur de commande modifiée qui entraîne une modification de la pente de l'aéronef de manière à provoquer un retour de la vitesse de l'aéronef dans le domaine de vitesses autorisé.

De façon avantageuse, pour modifier ladite pente, lesdits moyens de commande utilisent, comme valeur de commande, la valeur d'un paramètre de référence. Selon l'invention, ledit paramètre de référence peut notamment être :
- la vitesse de tangage de l'aéronef ;
- l'assiette longitudinale de l'aéronef ; ou
- le facteur de charge qui correspond à la différence entre l'accélération verticale à laquelle est soumis l'aéronef et l'accélération de la pesanteur.

Par ailleurs, dans un mode de réalisation particulièrement avantageux de l'invention, lesdits moyens de comparaison et lesdits moyens de calcul sont incorporés dans un même système de calcul.

De plus, de façon avantageuse, ledit système de calcul comporte :
- un premier élément de calcul qui détermine, à partir de ladite vitesse effective et de ladite vitesse maximale, une première valeur de commande correspondant à la valeur dudit paramètre de référence, pour laquelle l'aéronef peut être amené à ladite vitesse maximale ;
- un deuxième élément de calcul qui détermine, à partir de ladite vitesse effective et de ladite vitesse minimale, une deuxième valeur de commande correspondant à la valeur dudit paramètre de référence, pour laquelle l'aéronef peut être amené à ladite vitesse minimale ;
- un troisième élément de calcul qui détermine, à partir de la pente effective de l'aéronef, une troisième valeur de commande correspondant à la valeur dudit paramètre de référence, pour laquelle l'aéronef peut être amené à une pente nulle ;
- un premier élément de sélection qui choisit entre lesdites première et troisième valeurs de commande, comme première valeur de commande modifiée, la valeur entraînant le piqué le plus important de l'aéronef ; et
- un second élément de sélection qui choisit entre lesdites deuxième et troisième valeurs de commande, comme seconde valeur de commande modifiée, la valeur entraînant le cabrage le plus important de l'aéronef.

En outre, avantageusement, lesdits moyens de sélection sont formés de manière à sélectionner la valeur médiane entre lesdites première et seconde valeurs de commande modifiées et la valeur de commande de consigne. Dans le cadre de la présente invention, ladite valeur de commande de consigne représente la valeur de commande préconisée par le pilote (ou le pilote automatique).

Par ailleurs, de façon avantageuse, ledit premier élément de sélection est formé de manière à sélectionner la valeur médiane entre lesdites première et troisième valeurs de commande et une valeur de commande entraînant un piqué théorique extrême non réalisable par l'aéronef, tandis que ledit second élément de sélection est formé de manière à sélectionner la valeur médiane entre lesdites deuxième et troisième valeurs de commande et une valeur de commande entraînant un cabrage théorique extrême non réalisable par l'aéronef.

Dans un mode de mise en oeuvre particulièrement avantageux de l'invention, utilisant le facteur de charge comme paramètre de référence, avantageusement :
- lesdites première et deuxième valeurs de commande du facteur de charge sont respectivement proportionnelles aux différences entre ladite vitesse effective et respectivement lesdites vitesses maximale et minimale ; et
- ladite troisième valeur de commande du facteur de charge est proportionnelle à la pente effective de l'aéronef.

En outre, avantageusement, la valeur absolue desdites première et deuxième valeurs de commande est limitée à une valeur maximale prédéfinie, par exemple à 0,3 g, g représentant l'accélération de la pesanteur. Ainsi, les mouvements de l'aéronef engendrés par de telles valeurs de commande limitées permettent d'obtenir une modification de la pente de l'aéronef qui satisfait au compromis entre le confort des passagers et l'efficacité de la protection contre le dépassement des vitesses maximale et minimale.

Par ailleurs, de façon avantageuse, le dispositif conforme à l'invention peut comporter des moyens d'inhibition susceptibles d'inhiber l'action prioritaire des moyens destinés à imposer la valeur de commande modifiée de sorte que les moyens de commande reçoivent directement et uniquement la valeur de commande de consigne.

Ainsi, le dispositif conforme à l'invention peut être rendu inactif par la commande desdits moyens d'inhibition. Une telle commande peut notamment être réalisée lorsque l'aéronef se trouve dans une phase de vol pour laquelle la maintien de la trajectoire et donc de la pente est prioritaire par rapport au maintien de la vitesse.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 illustre l'action de moyens de commande de la pente et de la vitesse d'un aéronef.

La figure 3 représente un élément de sélection du dispositif conforme à l'invention.

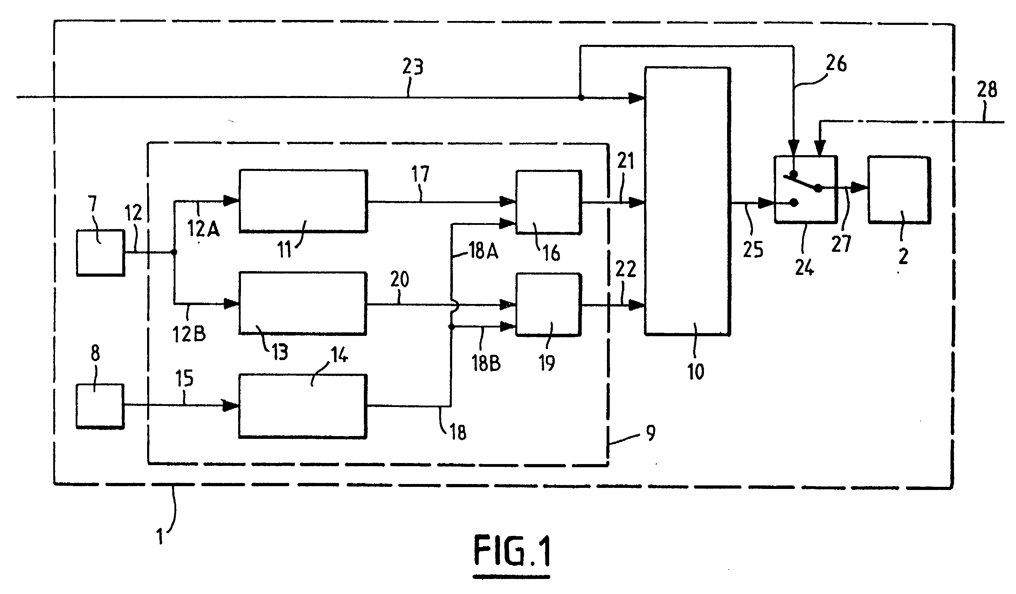

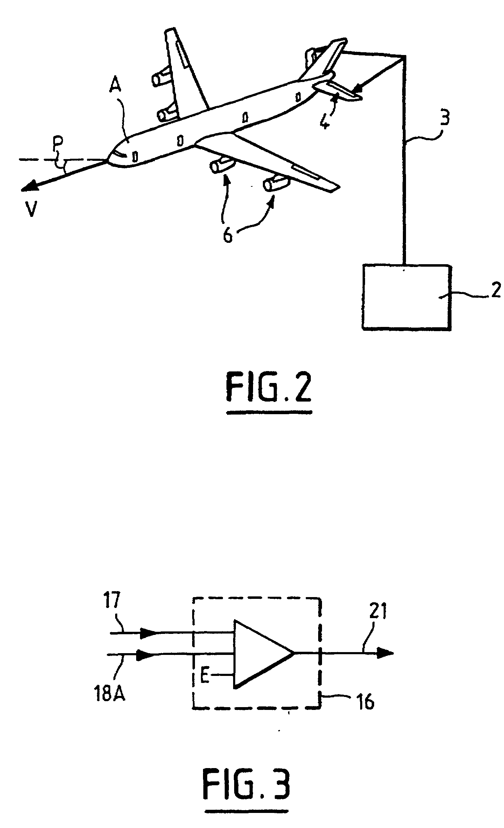

Le dispositif 1 conforme à l'invention et représenté schématiquement sur la figure 1 est monté sur un aéronef A, par exemple un avion de transport, comportant un pilote automatique et/ou un directeur de vol non représentés, pour assurer le maintien de cet aéronef A à une vitesse V compatible avec le domaine opérationnel dudit aéronef A, tel que représenté sur la figure 2.

A cet effet, ledit dispositif 1 comporte les moyens connus suivants :
- des moyens de commande 2 pour appliquer audit aéronef A une pente commandée et une vitesse commandée, à partir de valeurs de commande reçues. De façon connue, lesdits moyens de commande 2 sont incorporés dans le pilote automatique de l'aéronef A, et sont capables d'agir, comme représenté sur la figure 2, par l'intermédiaire d'organes de commande appropriés et non représentés, tel qu'indiqué par une liaison 3, sur les gouvernes de profondeur 4 de l'aéronef A pour modifier la pente P de ce dernier. On notera que le contrôle de la vitesse est assuré par le contrôle de la poussée de l'installation motrice 6, par l'intermédiaire de l'automanette non représentée ou par l'action du pilote sur les manettes de gaz également non représentées ;
- des moyens connus 7 pour déterminer la vitesse effective V dudit aéronef A ; et
- des moyens connus 8 pour déterminer la pente effective P dudit aéronef A.

Dans le cadre de la présente invention, lesdits moyens de commande 2 peuvent également être intégrés, le cas échéant, dans le directeur de vol non représenté de l'aéronef, qui de façon connue indique au pilote les manoeuvres à effectuer sur la commande de l'axe de tangage pour obtenir la pente souahitée.

En pratique, la vitesse effective de l'aéronef peut diverger de la vitesse commandée, par exemple lorsque l'installation motrice 6 n'est pas en mesure de fournir la poussée nécessaire quand la pente commandée est trop élevée.

Il est évident que, pour des raisons de sécurité et de capacités techniques de l'aéronef, la vitesse dudit aéronef doit être maintenue dans des domaines de valeurs limités. A cet effet, le pilote automatique est muni généralement de protections internes permettant notamment de limiter les valeurs de commande imposées audit pilote automatique.

Toutefois, l'étendue de ces protections est limitée de sorte qu'une excursion importante et susceptible d'être fortement préjudiciable de la vitesse, en dehors du domaine de vitesses prescrit, est possible.

Le dispositif 1 conforme à l'invention est destiné à éviter une telle excursion en maintenant de façon automatique l'aéronef A à une vitesse compatible avec les capacités techniques dudit aéronef, et il est donc notamment destiné à remédier aux inconvénients des protections internes précitées.

Pour atteindre cet objectif, ledit dispositif 1 comporte, selon l'invention, en plus des moyens connus précités 2, 7 et 8 :
- un système de calcul 9 qui comprend, comme précisé plus en détail ci-dessous :
   . des moyens pour comparer la vitesse effective de l'aéronef respectivement à deux vitesses de référence, en effectuant la différence avec lesdites valeurs. Lesdites vitesses de référence sont définies en fonction des capacités techniques de l'aéronef et correspondent à la vitesse maximale opérationnelle et à la vitesse minimale opérationnelle ; et
   . des moyens pour calculer, en fonction desdites comparaisons, deux valeurs de commande modifiées susceptibles d'aligner ladite vitesse effective respectivement sur lesdites vitesses de référence ; et
- des moyens 10, à action prioritaire, pour imposer auxdits moyens de commande 2 l'une desdites valeurs de commande modifiées, si une telle action est nécessaire pour maintenir la vitesse de l'aéronef A à l'intérieur du domaine de vitesses autorisé.

Dans le cadre de la présente invention, les valeurs de commande utilisées par les moyens de commande 2 correspondent aux valeurs d'un paramètre de référence qui peut être, notamment, la vitesse de tangage de l'aéronef, l'assiette longitudinale dudit aéronef ou le facteur de charge qui correspond à la différence entre l'accélération verticale à laquelle est soumis l'aéronef A et l'accélération de la pesanteur.

Dans le mode de représentation particulièrement avantageux de l'invention montré sur la figure 2, ledit système de calcul 9 comporte :
- un élément de calcul 11 qui est relié par une branche 12A d'une liaison 12 aux moyens 7 et qui détermine, à partir de la vitesse effective V de l'aéronef A reçue par les moyens 7 et de la vitesse de référence maximale qui est enregistrée, une première valeur de commande correspondant à la valeur dudit paramètre de référence, pour laquelle l'aéronef A peut être amené à ladite vitesse maximale ;
- un élément de calcul 13 qui est relié par une branche 12B de la liaison 12 aux moyens 7 et qui détermine, à partir de la vitesse effective V reçue par les moyens 7 et de la vitesse de référence minimale enregistrée, une deuxième valeur de commande correspondant à la valeur dudit paramètre de référence, pour laquelle l'aéronef A peut être amené à ladite vitesse minimale ;
- un élément de calcul 14 qui est relié par une liaison 15 aux moyens 8 et qui détermine, à partir de la pente effective P de l'aéronef reçue par lesdits moyens 8, une troisième valeur de commande correspondant à la valeur dudit paramètre de référence, pour laquelle l'aéronef A peut être amené à une pente nulle ;
- un élément de sélection 16 qui est relié aux éléments de calcul 11 et 14, respectivement par l'intermédiaire d'une liaison 17 et d'une branche 18A d'une liaison 18, et qui choisit entre lesdites première et troisième valeurs de commande, comme première valeur de commande modifiée, la valeur entraînant le piqué le plus important de l'aéronef A ; et
- un élément de sélection 19 qui est relié aux éléments de calcul 13 et 14, respectivement par l'intermédiaire d'une liaison 20 et d'une branche 18B de la liaison 18, et qui choisit entre lesdites deuxième et troisième valeurs de commande, comme seconde valeur de commande modifiée, la valeur entraînant le cabrage le plus important de l'aéronef A.

Dans un mode de réalisation avantageux, lesdits éléments de sélection 16 et 19 sont formés de manière à sélectionner et à transmettre la valeur médiane entre trois valeurs différentes, comme représenté pour l'élément de sélection 16 sur la figure 3.

En ce qui concerne ledit élément de sélection 16, les trois valeurs considérées sont :
- la première valeur de commande reçue par la liaison 17 ;
- la troisième valeur de commande reçue par la branche 18A de la liaison 18 ; et
- une valeur de commande enregistrée E entraînant un piqué théorique extrême non réalisable par l'aéronef.

Quant à l'élément de sélection 19, il utilise les deuxième et troisième valeurs de commande, ainsi qu'une valeur enregistrée entraînant un cabrage théorique extrême non réalisable par l'aéronef.

De même, les moyens 10 sont formés de manière à sélectionner la valeur médiane entre :
- la première valeur de commande modifiée, reçue de l'élément de sélection 16 par une liaison 21 ;
- la seconde valeur de commande modifiée, reçue de l'élément de sélection 19 par une liaison 22 ; et
- la valeur de commande de consigne, en fonction des sélections du pilote, qui est reçue par l'intermédiaire d'une liaison 23 de moyens connus non représentés et qui permet de maintenir l'aéronef A à la consigne du pilote.

Dans le cas usuel, c'est-à-dire en l'absence du dispositif 1 conforme à l'invention, ladite valeur de commande de consigne est transmise telle quelle, directement aux moyens de commande 2 qui l'appliquent à l'aéronef A.

Ladite valeur médiane sélectionnée par les moyens 10, est transmise aux moyens de commande 2 qui commandent alors :
- soit un maintien de la valeur de commande de consigne, si cette dernière a été sélectionnée, c'est-à-dire si la vitesse effective V de l'aéronef A est comprise entre les vitesses minimale et maximale prescrites ;
- soit une modification de la valeur de commande, si l'une des valeurs de commande modifiées a été sélectionnée.

Une telle modification de la valeur de commande de consigne est réalisée dans les cas suivants :
- lorsque pour une pente positive, la vitesse effective V de l'aéronef A devient inférieure à la vitesse minimale prescrite, pour une poussée donnée de l'installation motrice 6, de sorte que la valeur sélectionnée est la deuxième valeur de commande qui engendre une diminution de la pente effective (et ainsi une augmentation de la vitesse) ;
- lorsque pour une pente négative, la vitesse effective V de l'aéronef A devient supérieure à la vitesse maximale prescrite, pour une poussée donnée, de sorte que la valeur sélectionnée est la première valeur de commande qui engendre une modification appropriée de la pente effective (entraînant une réduction de la vitesse) ; ou
- lorsque se présente une incompatibilité dans les valeurs de mesure fournies par les moyens 7 et 8, ou lors d'une panne d'un élément essentiel du dispositif 1 ou du pilote automatique, de sorte que la valeur sélectionnée est alors la troisième valeur de commande qui amène l'aéronef à l'horizontale, c'est-à-dire à une pente nulle.

Ainsi, la vitesse de l'aéronef est toujours maintenue dans le domaine de vitesses autorisé et dans le cas extrême, l'aéronef est mis en palier (à une pente nulle).

Par ailleurs, le dispositif 1 comporte des moyens d'inhibition 24 qui sont reliés, par une liaison 25 à la sortie des moyens 10, par une liaison 26 à la liaison 23 transmettant la valeur de commande de consigne, et par une liaison 27 à l'entrée des moyens de commande 2. Lesdits moyens d'inhibition 24 peuvent être amenés :
- soit dans une position inactive, dans laquelle ils relient la liaison 25 à la liaison 27 de sorte que le dispositif 1 est activé ;
- soit dans une position active, dans laquelle ils relient la liaison 26 à la liaison 27 de sorte que l'action du dispositif 1 est inhibée et que les moyens de commande 2 reçoivent toujours, directement, la valeur de commande de consigne. Cette position d'inhibition peut notamment être engendrée, lorsque l'aéronef se trouve dans une phase de vol, pour laquelle le maintien de la trajectoire et donc de la pente est prioritaire par rapport au maintien de la vitesse.

La commutation desdits moyens d'inhibition 24 entre lesdites positions d'action et d'inhibition peut être effectuée, par l'intermédiaire d'une liaison 28 :
- soit manuellement, par le pilote, lorsqu'il juge une telle commutation nécessaire ou utile ;
- soit automatiquement, par un moyen approprié non représenté commandant la commutation en fonction des modes de fonctionnement du pilote automatique.

## Revendications

1. Dispositif automatique pour maintenir la vitesse d'un aéronef (A) à l'intérieur d'un domaine de vitesses limité par les vitesses minimale et maximale autorisées en fonction des capacités techniques dudit aéronef (A), ledit dispositif comportant :
- des moyens de commande (2) pour appliquer audit aéronef (A) une pente commandée ;
- des moyens (7) pour déterminer la vitesse effective (V) dudit aéronef (A) ; et
- des moyens (11,13) pour comparer ladite vitesse effective (V) respectivement auxdites vitesses maximale et minimale,
**caractérisé en ce qu'**il comporte de plus :
- des moyens (9) pour calculer, en fonction desdites comparaisons, deux valeurs de commande modifiées susceptibles d'aligner ladite vitesse effective respectivement sur lesdites vitesses maximale et minimale, par modification exclusivement de la pente ; et
- des moyens (10), à action prioritaire, pour imposer exclusivement auxdits moyens de commande (2), l'une desdites valeurs de commande modifiées, si une telle action est nécessaire pour maintenir la vitesse dudit aéronef (A) à l'intérieur dudit domaine de vitesses.

2. Dispositif selon la revendication 1,
**caractérisé en ce que** lesdits moyens de commande (2) utilisent, comme valeur de commande, la valeur d'un paramètre de référence.

3. Dispositif selon l'une quelconque des revendications 1 ou 2,
**caractérisé en ce que** lesdits moyens de comparaison (11,13) et lesdits moyens de calcul (9) sont incorporés dans un même système de calcul (9).

4. Dispositif selon la revendication 3,
**caractérisé en ce que** ledit système de calcul (9) comporte :
- un premier élément de calcul (11) qui détermine, à partir de ladite vitesse effective (V) et de ladite vitesse maximale, une première valeur de commande correspondant à la valeur dudit paramètre de référence, pour laquelle l'aéronef peut être amené à ladite vitesse maximale ;
- un deuxième élément de calcul (13) qui détermine, à partir de ladite vitesse effective (V) et de ladite vitesse minimale, une deuxième valeur de commande correspondant à la valeur dudit paramètre de référence, pour laquelle l'aéronef peut être amené à ladite vitesse minimale ;
- un troisième élément de calcul (14) qui détermine, à partir de la pente effective (P) de l'aéronef, une troisième valeur de commande correspondant à la valeur dudit paramètre de référence, pour laquelle l'aéronef peut être amené à une pente nulle ;
- un premier élément de sélection (16) qui choisit entre lesdites première et troisième valeurs de commande, comme première valeur de commande modifiée, la valeur entraînant le piqué le plus important de l'aéronef (A) ; et
- un second élément de sélection (19) qui choisit entre lesdites deuxième et troisième valeurs de commande, comme seconde valeur de commande modifiée, la valeur entraînant le cabrage le plus important de l'aéronef (A).

5. Dispositif selon la revendication 4,
**caractérisé en ce que** lesdits moyens (10) à action prioritaire sont formés de manière à sélectionner la valeur médiane entre lesdites première et seconde valeurs de commande modifiées et la valeur de commande de consigne préconisée par le pilote de l'aéronef.

6. Dispositif selon l'une des revendications 4 ou 5,
**caractérisé en ce que** ledit premier élément de sélection (16) est formé de manière à sélectionner la valeur médiane entre lesdites première et troisième valeurs de commande et une valeur de commande entraînant un piqué théorique extrême non réalisable par l'aéronef.

7. Dispositif selon l'une des revendications 4 à 6,
**caractérisé en ce que** ledit second élément de sélection (19) est formé de manière à sélectionner la valeur médiane entre lesdites deuxième et troisième valeurs de commande et une valeur de commande entraînant un cabrage théorique extrême non réalisable par l'aéronef.

8. Dispositif selon l'une quelconque des revendications 2 à 7,
**caractérisé en ce que** ledit paramètre de référence est la vitesse de tangage de l'aéronef.

9. Dispositif selon l'une quelconque des revendications 2 à 7,
**caractérisé en ce que** ledit paramètre de référence est l'assiette longitudinale de l'aéronef.

10. Dispositif selon l'une quelconque des revendications 2 à 7,
**caractérisé en ce que** ledit paramètre de référence est le facteur de charge qui correspond à la différence entre l'accélération verticale à laquelle est soumis l'aéronef et l'accélération de la pesanteur.

11. Dispositif selon les revendications 4 et 10,
**caractérisé en ce que** lesdites première et deuxième valeurs de commande du facteur de charge sont respectivement proportionnelles aux différences entre ladite vitesse effective (V) et respectivement lesdites vitesses maximale et minimale.

12. Dispositif selon les revendications 4 et 10,
**caractérisé en ce que** ladite troisième valeur de commande du facteur de charge est proportionnelle à la pente effective (P) de l'aéronef (A).

13. Dispositif selon l'une quelconque des revendications 4 à 12,
**caractérisé en ce que** la valeur absolue desdites première et deuxième valeurs de commande est limitée à une valeur maximale prédéfinie.

14. Dispositif selon l'une quelconque des revendications 1 à 13,
**caractérisé en ce qu'**il comporte des moyens d'inhibition (24) susceptibles d'inhiber l'action prioritaire des moyens (10) destinés à imposer une valeur de commande modifiée de sorte que les moyens de commande (2) reçoivent directement et uniquement la valeur de commande de consigne préconisée par le pilote de l'aéronef.

## Patentansprüche

1. Eine automatische Vorrichtung, um die Geschwindigkeit eines Flugzeugs (A) in einem Bereich zu halten, der durch die je nach technischem Leistungsvermögen des genannten Flugzeugs (A) zulässige Mindest- und Höchstgeschwindigkeit begrenzt wird, wobei die genannte Vorrichtung umfasst:
- Steuermittel (2), um dem genannten Flugzeug (A) eine gesteuerte Neigung zu verleihen;
- Mittel (7), um die tatsächliche Geschwindigkeit (V) des genannten Flugzeugs (A) zu ermitteln; und
- Mittel (11, 13), um die genannte tatsächliche Geschwindigkeit (V) jeweils mit der genannten Höchst- und der genannten Mindestgeschwindigkeit zu vergleichen,
**dadurch gekennzeichnet, dass** sie ferner aufweist:
- Mittel (9), um in Abhängigkeit von den genannten Vergleichen zwei veränderte Steuerwerte zu berechnen, mit denen die genannte tatsächliche Geschwindigkeit jeweils auf die genannte Höchst- und die genannte Mindestgeschwindigkeit ausgerichtet werden kann, und zwar ausschließlich durch Änderung der Neigung; und
- Mittel (10) mit vorrangiger Wirkung, um ausschließlich an die genannten Steuermittel (2) einen der genannten veränderten Steuerwerte zu übertragen, wenn eine derartige Aktion erforderlich wird, um die Geschwindigkeit des genannten Flugzeugs (A) in dem genannten Geschwindigkeitsbereich zu halten.

2. Vorrichtung nach Anspruch 1,
**dadurch gekennzeichnet, dass** die genannten Steuermittel (2) als Steuerwert den Wert eines Bezugsparameters verwenden.

3. Vorrichtung nach einem beliebigen der Ansprüche 1 oder 2,
**dadurch gekennzeichnet, dass** die genannten Vergleichsmittel (11, 13) und die genannten Rechenmittel (9) in ein und dasselbe Rechensystem (9) integriert sind.

4. Vorrichtung nach Anspruch 3,
**dadurch gekennzeichnet, dass** das genannte Rechensystem (9) umfasst:
- ein erstes Rechenglied (11), das ausgehend von der genannten tatsächlichen Geschwindigkeit (V) und der genannten Höchstgeschwindigkeit einen ersten Steuerwert ermittelt, der dem Wert des genannten Bezugsparameters entspricht, bei dem das Flugzeug auf die genannte Höchstgeschwindigkeit gebracht werden kann;
- ein zweites Rechenglied (13), das ausgehend von der genannten tatsächlichen Geschwindigkeit (V) und der genannten Mindestgeschwindigkeit einen zweiten Steuerwert ermittelt, der dem Wert des genannten Bezugsparameters entspricht, bei dem das Flugzeug auf die genannte Mindestgeschwindigkeit gebracht werden kann;
- ein drittes Rechenglied (14), das ausgehend von der tatsächlichen Neigung (P) des Flugzeugs einen dritten Steuerwert ermittelt, der dem Wert des genannten Bezugsparameters entspricht, bei dem das Flugzeug in eine Neigung von Null gebracht werden kann;
- ein erstes Auswahlglied (16), das aus dem genannten ersten und dem genannten zweiten Steuerwert als ersten veränderten Steuerwert den Wert auswählt, der den stärksten Sturzflug des Flugzeugs (A) bewirkt; und
- ein zweites Rechenglied (19), das aus dem genannten zweiten und dem genannten dritten Steuerwert als zweiten veränderten Steuerwert den Wert auswählt, der das stärkste Hochziehen des Flugzeugs (A) bewirkt.

5. Vorrichtung nach Anspruch 4,
**dadurch gekennzeichnet, dass** die genannten Mittel (10) mit vorrangiger Wirkung derart gestaltet sind, dass sie den Mittelwert aus dem genannten ersten und dem genannten zweiten veränderten Steuerwert und dem vom Piloten des Flugzeugs vorgegebenen Sollsteuerwert auswählen.

6. Vorrichtung nach einem beliebigen der Ansprüche 4 oder 5,
**dadurch gekennzeichnet, dass** das erste Auswahlglied (16) derart gestaltet ist, dass es den Mittelwert aus dem genannten ersten und dem genannten dritten Steuerwert sowie einem Steuerwert, der einen extremen, vom Flugzeug nicht ausführbaren theoretischen Sturzflug bewirkt, auswählt.

7. Vorrichtung nach einem der Ansprüche 4 bis 6,
**dadurch gekennzeichnet, dass** das zweite Auswahlglied (19) derart gestaltet ist, dass es den Mittelwert zwischen dem genannten zweiten und dem genannten dritten Steuerwert sowie einem Steuerwert, der ein extremes, vom Flugzeug nicht ausführbares theoretisches Hochziehen bewirkt, auswählt.

8. Vorrichtung nach einem beliebigen der Ansprüche 2 bis 7,
**dadurch gekennzeichnet, dass** der genannte Bezugsparameter die Nickgeschwindigkeit des Flugzeugs ist.

9. Vorrichtung nach einem beliebigen der Ansprüche 2 bis 7,
**dadurch gekennzeichnet, dass** der genannte Bezugsparameter der Trimmwinkel des Flugzeugs ist.

10. Vorrichtung nach einem beliebigen der Ansprüche 2 bis 7,
**dadurch gekennzeichnet, dass** der genannte Bezugsparameter der Lastfaktor ist, der der Differenz zwischen der vertikalen Beschleunigung, der das Flugzeug unterworfen wird, und der Schwerkraftbeschleunigung entspricht.

11. Vorrichtung nach den Ansprüchen 4 und 10,
**dadurch gekennzeichnet, dass** der genannte erste und der genannte zweite Steuerwert des Lastfaktors jeweils den Differenzen zwischen der genannten tatsächlichen Geschwindigkeit (V) und der genannten Höchst- bzw. der genannten Mindestgeschwindigkeit proportional sind.

12. Vorrichtung nach den Ansprüchen 4 und 10,
**dadurch gekennzeichnet, dass** der genannte dritte Steuerwert des Lastfaktors der tatsächlichen Neigung (P) von Flugzeug (A) proportional ist.

13. Vorrichtung nach einem beliebigen der Ansprüche 4 bis 12,
**dadurch gekennzeichnet, dass** der absolute Wert des genannten ersten und des genannten zweiten Steuerwerts auf einen vorgegebenen Höchstwert begrenzt ist.

14. Vorrichtung nach einem beliebigen der Ansprüche 1 bis 13,
**dadurch gekennzeichnet, dass** sie Hemmungsmittel (24) aufweist, die die vorrangige Wirkung der Mittel (10) hemmen können, die dazu dienen, einen veränderten Steuerwert zu übertragen, so dass die Steuermittel (2) direkt und ausschließlich den vom Piloten des Flugzeugs vorgegebenen Sollsteuerwert empfangen können.

## Claims

1. An automatic device for maintaining the speed of an aircraft (A) within a speed range delimited by minimal and maximal speeds authorised by the technical capabilities of said aircraft (A), said device including:
- control means (2) for applying a commanded rate of climb to said aircraft (A);
- means (7) for determining the effective speed (V) of said aircraft (A);
- means (11, 13) for comparing said effective speed (V) with said maximal and minimal speeds, respectively;
**characterized in that** it includes:
- means (9) for calculating, on the basis of said comparison, two modified control values adapted to align said effective speed with said maximal and minimal speeds, respectively, by exclusive modification of the rate of climb; and
- priority action means (10) for exclusively imposing on said control means (2) one of said modified control values if such action is necessary to maintain the speed of said aircraft (A) within said speed range.

2. The device according to claim 1 **characterized in that** said control means (2) use the value of a reference parameter as a control value.

3. The device according to claim 1 or 2 **characterized in that** said comparator means (11, 13) and said calculator means (9) are incorporated into one and the same calculator system (9).

4. The device according to claim 3 **characterized in that** said calculator system (9) includes:
- a first calculator unit (11) which determines from said effective speed (V) and from said maximal speed a first control value corresponding to the value of said reference parameter for which the aircraft may be brought to said maximal speed;
- a second calculator unit (13) which determines from said effective speed (V) and from said minimal speed a second control value corresponding to the value of said reference parameter for which the aircraft may be brought to said minimal speed;
- a third calculator unit (14) which determines from the effective rate of climb (P) of the aircraft a third control value corresponding to the value of said reference parameter for which the aircraft may be brought to a zero rate of climb;
- a first selector unit (16) which chooses either said first control value or said third control value as said first modified control value according to which of them produces the greater nose-down attitude of the aircraft (A); and
- a second selector unit (19) which chooses either said second control value or said third control value as said second modified control value according to which of them produces the greater nose-up attitude of the aircraft (A).

5. The device according to claim 4 **characterized in that** said priority action means (10) are adapted to select the median value between said first and second modified control values and the set point control value determined by the pilot of the aircraft.

6. The device according to either of claims 4 or 5 **characterized in that** said first selector unit (16) is adapted to select the median value between said first and third control values and a control value leading to a theoretical extreme nose-down attitude that cannot be achieved by the aircraft.

7. The device according to any of claims 4 to 6 **characterized in that** said second selector unit (19) is adapted to select the median value between said second and third control values and a control value leading to a theoretical extreme nose-up attitude that cannot be achieved by the aircraft.

8. The device according to any of claims 2 to 7 **characterized in that** said reference parameter is the rate of pitch of the aircraft.

9. The device according to any of claims 2 to 7 **characterized in that** said reference parameter is the longitudinal attitude of the aircraft.

10. The device according to any of claims 2 to 7 **characterized in that** said reference parameter is the load factor, which corresponds to the difference between the vertical acceleration of the aircraft and the acceleration due to gravity.

11. The device according to claims 4 and 10 **characterized in that** said first and second load factor control values are respectively proportional to the differences between said effective speed (V) and said maximal and minimal speeds, respectively.

12. The device according to claims 4 and 10 **characterized in that** said third load factor control value is proportional to the effective rate of climb (P) of the aircraft (A).

13. The device according to any of claims 4 to 12 **characterized in that** the absolute value of said first and second control values is limited to a predefined maximal value.

14. The device according to any of claims 1 to 13 **characterized in that** it includes inhibitor means (24) adapted to inhibit the priority action of the means (10) adapted to impose a modified control value so that the control means (2) receive directly only the set point control value determined by the pilot of the aircraft.
